# EUROPEAN PATENT APPLICATION

(11) **EP 1 746 601 A1**
(43) Date of publication of application: **24.01.2007**
(21) Application number: 05719345.0
(22) Date of filing: 21.02.2005
(51) Int. Cl.: G11B 33/12

(54) **CONNECTION UNIT FOR DATA RECORDING DEVICE**

(30) Priority: 23.02.2004 JP 2004046053
(71) Applicant: Orient Instrument Computer Co., Ltd, Chuo-ku Osaka-shi Osaka 540-6035 (JP)
(72) Inventor: ITO, Tomoaki, ORIENT INSTRUMENT COMPUTER CO., LTD., Osaka-shi, Osaka 5360014 (JP)
(74) Representative: Paul, Dieter-Alfred
(86) International application number: PCT/JP2005/002726
(87) International publication number: WO 2005/081253

(57) **Abstract**

There is provided a connection unit for a data recording device adapted to readily attach a connector electrically connected to another device to connection terminals of the data recording device and detach it therefrom.

A connection unit 1 for a data recording device 5, including a base 10 and a connector 51 fixed to the base 10, and for connecting to the connector 51 the thin data recording device 5 of a cuboid shape and with a plurality of connection terminals 5a arranged at one side 5e of the device 5, wherein the base 10 includes a receptacle 31 being movable along a direction heading for the connector 11 with accommodating the data recording device 5, and wherein the receptacle 31 is adapted to hold the device 5 by pressing both sides 5b and 5c of the device 5 along the direction in which the receptacle 31 moves upon application of pushing force to the receptacle 31 toward the connector 51, so as to move with adjusting the device 5 in a position corresponding to a position where the connector 51 is fixed, so that the connection terminals 5a are connected to the connecter 51.

## Description

### BACKGROUND OF THE INVENTION

### TECHNICAL FIELD

The present invention relates to a connection unit in connection of a data recording device such as a hard disk drive to another device.

### BACKGROUND ART

Conventionally, a Hard Disc Drive (hereinafter referred to as a HDD) has been employed in a data recording device for installing an OS or various kinds of programs among data recording devices for use in personal computers (hereinafter referred to as PCs), in view of access speed or recording capacity.

Conventionally, a user of a PC is required to install an OS (Operating System) or various kinds of necessary software in a HDD by himself or herself, requiring labor and time.

Thus, recently, PCs preinstalled with an OS or various kinds of software in a HDD are in the marketplace. Specifically, manufacturers install in advance an OS or application software commonly used by users in a HDD, so as to sell Preinstall PCs each having software that is used by users immediately after purchase.

Such Preinstall PCs do not require users' bothersome installation, and whereby even a beginner can readily use the PCs.

However, manufacturers providing such Preinstall PCs need to install in advance an OS or various kinds of software in a HDD instead of users. Therefore, a data copy device that copies data recorded in a master HDD to a plurality of target HDDs was developed.

The patent document 1 discloses a method for copying data employed for such a HDD data copy device. The method disclosed in the patent document 1 copies data recorded in a master HDD to a plurality of target HDDs and, in copying, does not copy an area where data is not recorded, thereby efficiently performing a copy.

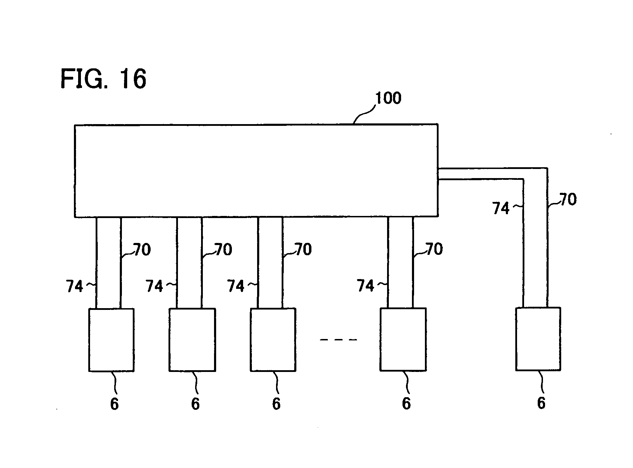

As shown in Fig. 16, data copy into a plurality of HDDs is performed by using a data copy device 100. Specifically, a master HDD 6 in which data has been already recorded is connected to the data copy device 100 via a flat cable 70 and a power cable 74. On the other hand, a plurality of target HDDs 6 · · each are connected to the data copy device 100 via another flat cable 70 and another power cable 74. Thereupon, data recorded in the master HDD 6 is read by the data copy device 100 and is copied to the target HDDs 6.

HDDs include 3.5-inch HDDs incorporating 3.5-inch disks and mainly used in desktop computers and 2.5-inch HDDs incorporating 2.5-inch disks and mainly used in laptop computers.

A data recording device such as the HDD has a standardized interface requiring connection of a number of signal lines, so as to employ a flat cable as a signal line and a compact multicore connecter for reduction of connecting space of signal lines with reliable connection.

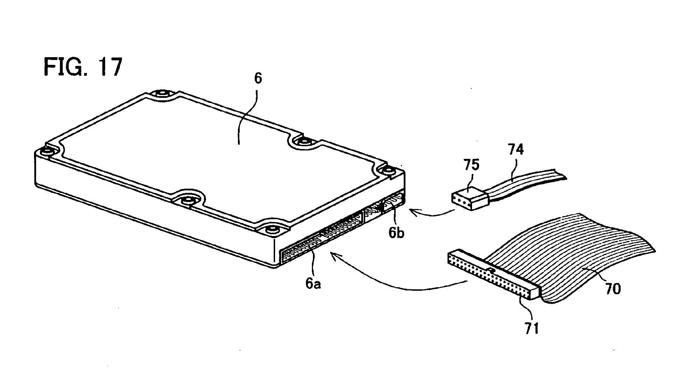

As shown in Fig. 17, for example, a flat cable 70 and a power cable 74 connect a 3.5-inch HDD 6 to the data copy device 100. Specifically, a connector 71 of the flat cable 70 is connected to connection terminals 6a of the HDD 6, whereas a connector 75 of the power cable 74 is connected to a power terminal 6b of the HDD 6.

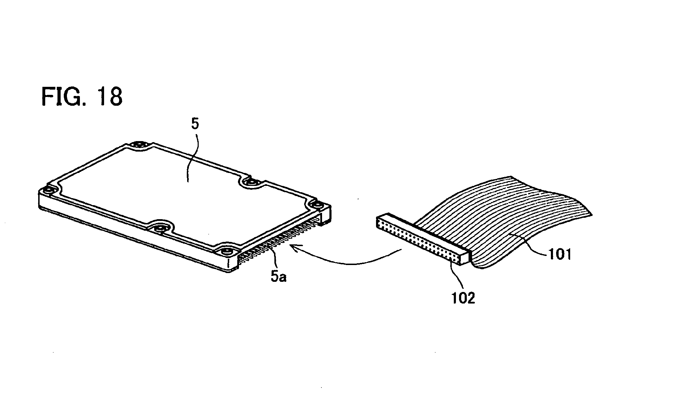

In contrast, as shown in Fig. 18, only a flat cable 101 incorporating a power line connects a 2.5-inch HDD 5 to the data copy device 100. Specifically, a connector 102 of the flat cable 101 is connected to a power terminal 5b of the HDD 5.

More specifically, as shown in Fig. 16, in the case of data copy of the 3.5-inch HDD 6, each of a master HDD 6 and a plurality of target HDDs 6 are connected to the data copy device 100 via the flat cable 70 and the power cable. On the other hand, in the case of data copy of the 2.5-inch HDD 5, each of a master HDD 5 and a plurality of target HDDs 5 are connected to the data copy device 100 via the flat cable 101. Thereby, data recorded in a master HDD is copied to a plurality of target HDDs efficiently and in a short period of time.
Patent Document 1: JP 10-064170A

### DISCLOSURE OF THE INVENTION

### PROBLEMS TO BE SOLVED BY THE INVENTION

However, in order to make data copy of the 3.5-inch HDD 6, as shown in Fig. 17, in each of a number of HDDs 6, it is necessary to insert or pull the connector 71 having a number of pins into or out of the connection terminals 6a of the HDD 6, resulting in a failure such as bending or breakage of the connection terminals 6a of the HDD in insertion, in addition to difficulty in insertion of the connector 71.

Further, because of a number of pins, once the connector 71 is connected to the connection terminals 6a, its connection is strict. Therefore, the inserted connector 71 is pulled out in such a manner as alternately slightly swinging longitudinal ends of the connector 71 or forcedly pulling with grasping the flat cable 70, so that the connection terminal is subject to bending or breakage, and further, pull-out needs a lot of labor. Further, the connector 71 is subject to contact failure by forced pull-out of the connector 71, causing a problem.

A similar problem is also caused in the case of data copy of the HDD 5 shown in Fig. 18. In connection between connection terminals 5a of the HDD 5 and the connector 102 of the flat cable 101, the connection terminals 5a are subject to bending or breakage, and in pull-out, the pull-out needs a lot of labor and the connector 102 is subject to bending, breakage, or contact failure.

It is therefore an object of the present invention made in view of such problems and drawbacks described above to provide a connection unit for a data recording device adapted to readily attach a multicore connector such as a flat cable to a data recording device such as a hard disk drive and detach it therefrom.

### SUMMARY OF THE INVENTION

One of aspects of the invention proposed to achieve the above-mentioned object is a connection unit for a data recording device, including a base and a connector fixed to the base, and for connecting to the connector a data recording device of a substantially cuboid shape and with a plurality of connection terminals arranged at one side of the device, wherein the base includes a receptacle being movable along a direction heading for the connector with accommodating the data recording device, and wherein the receptacle is adapted to hold the device by pressing both sides of the device along the direction in which the receptacle moves upon application of pushing force to the receptacle toward the connector, so as to move with adjusting the device in a position corresponding to a position where the connector is fixed, so that the connection terminals are connected to the connecter.

An interface of a data recording device is standardized, requiring connection between a number of signal lines. A hard disk drive that is one of data recording devices, for example, needs to connect a number of signal lines having 40 to 50 cores specified by IDE (Integrated Device Electronics) standard or ATA (Advanced Technology Attachment) standard serving standardization of various IDE standards. Consequently, a compact multicore connector and a flat cable for signal lines are employed so as to ensure connection with reducing connection space for signal lines, resulting in being extremely difficult in and requiring time for attachment and detachment of the connector and further being subject to bending sharply or breaking of connection terminals in attachment and detachment.

According to the present aspect, upon application of pushing force heading for the connector to the receptacle accommodating the data recording device therein, the receptacle holds the device by pressing both sides of the device along a direction in which the receptacle moves. That adjusts the device in the position corresponding to the position where the connector is fixed. Then, the device is moved toward the connector with positioned so that the connection terminals of the device are connected to the connecter.

In other words, according to the present aspect, the receptacle is movable only in a direction close to and away from the connector, so as to move without relative displacement to connect the connection terminals of the device to the connector once the device is held and adjusted in the position where the connector is fixed. Thereby, only application of pushing force to the receptacle facilitates connecting the device to the connector, and avoids relative displacement so as to protect the connection terminals from bending or breaking.

Further, it is preferable to have such a structure that the both sides of the data recording device are pressed only when the pushing force toward the connector is applied to the receptacle and that the both sides are released when the pushing force is not applied. That facilitates accommodating the device in the receptacle and taking out it thereof.

In this aspect, various kinds of configurations for applying pushing force heading for the connector to the receptacle can be employed. For example, it is possible to have such a configuration that an operation lever is disposed at the base to apply pushing force heading for the connector to the receptacle by operation of the operation lever.

Further, various kinds of configurations for fixing the connector to the base can be employed. For example, it is possible to have such a configuration as fixing the connector to the base using a bracket or the like, or as fixing to the base a board to which the connector is fixed.

A more specific configuration includes such a configuration that the receptacle is formed by combination of a first movable member adapted to move along sliding guides secured to the base and a second movable member attached to the first movable member in such a manner as moving in a direction oblique to the direction in which the first movable member moves and along the base, and that the first movable member is adapted to have contact with one side of the data recording device along the sliding guides and the second movable member is adapted to have contact with the other side of the device along the sliding guides and a side facing to a side provided with the connection terminals, the pushing force toward the connector being applied to one selected from the second and the first movable members.

A further specific configuration includes such a configuration in the connection unit that the receptacle is formed by combination of a first movable member adapted to move along sliding guides secured to the base and a second movable member attached to the first movable member in such a manner as moving in a direction oblique to the direction in which the first movable member moves and along the base, and that the first movable member is adapted to have contact with one side of the data recording device along the sliding guides and the second movable member is adapted to have contact with the other side of the device along the sliding guides and a side facing to a side provided with the connection terminals, the pushing force toward the connector being applied to the second movable members.

According to the present aspect, upon application of pushing force heading for the connector to the second movable member, the second movable member moves along the base in a direction oblique to a direction in which the first movable member moves by component force of the pushing force. Consequently, the oblique direction in which the second movable member moves is appropriately set so that a contacting portion where the second movable member is contactable to the device comes closer to a contacting portion where the first movable member is contactable to the device.

Upon application of the pushing force heading for the connector to the second movable member with the oblique direction of the second movable member set in this way, the component force of the pushing force allows the second movable member to move the set oblique direction, so that one side of the device is fixedly supported by the first movable member and the other side of the device is pushed by the second movable member. Thereby, the both sides of the device are held by the first and second movable members, so that the one side of the device is aligned with the contacting portion of the first movable member.

If and when the pushing force heading for the connector is further continuously applied to the second movable member, the second movable member is prevented from further moving in the oblique direction because the both sides of the device are held by the first and the second movable members. Thus, the first and second movable members integrally move toward the connector with holding the device by pressing the both sides of the device.

Then, when the connection terminals of the device come into contact with the connector, the opposite side of a side provided with the connection terminals of the device comes in contact with the second movable member. Thereafter, the connection terminals of the device are pressed into the connector 51 to complete the connection.

Consequently, according to the present aspect, even though the data recording device is randomly accommodated in the receptacle, alignment by preadjustment of the contacting portion of the first movable member and the position of the connector makes positioning of the device with respect to the connector by holding the both sides of the device, only with application of the pushing force heading for the connector to the second movable member. That ensures connection of the connection terminals of the device to the connector with no breaking or bending of the connection terminals.

Further, according to the present aspect, the second movable member is stopped from moving in the oblique direction upon release of the application of the pushing force to the second movable member, so that pressure to the other side of the device is released. Specifically, holding of the device by pressing the both sides of the device by the first and the second movable member is released upon release of the application of the pushing force to the second movable member. Consequently, after the connection terminals of the device and the connector are connected, release of application of the pushing force to the second movable member prevents stress from being applied to a part where the connection terminals and the connector are connected.

It is preferable to have such a configuration that no component force of the pushing force to the oblique direction generates when the pushing force is not applied to the second movable member.

According to this configuration, when being pushed in a direction away from the connector, the second movable member moves backward along the oblique direction to be separated away from the other side of the device. That extends the gap between the other side of the device and the contacting portion of the second movable member, thereby facilitating accommodating the device in the receptacle and taken it out thereof.

It is preferable that the second movable member is urged in a direction away from the connector relative to the first movable member.

According to the present aspect, the component force along the oblique direction of the urging force makes the second movable member to move along the oblique direction adversely in the case of application of the pushing force heading for the connector to the second movable member. That extends the gap between the contacting portions of the first and second movable members when the pushing force is not applied to the second movable member, thereby facilitating accommodating the device in the receptacle and taking it out thereof.

In the present aspect, the urging force needs to be set smaller than the pushing force required for making the receptacle to move toward the connector. Setting of the urging force in this way facilitates accommodation of the data recording device when the pushing force is not applied to the second movable member, and further ensures the above-mentioned operations for positioning and connection when the pushing force heading for the connector is applied to the second movable member.

In the present aspect, the urging force is applied using a member such as a general-purpose coil spring. Specifically, employment of such a structure as connecting a coil spring between the second and the first movable members along a moving direction in which the receptacle moves produces the urging force in the direction away from the connector relative to the first movable member within the second movable member.

It is also preferable that the first movable member is adapted to have contact with the side provided with the connection terminals of the device, the urging force away from the connector being applied to the first movable member.

According to the present aspect, application of the pushing force in the direction away from the connector to the first movable member makes the first movable member to move, thereby bringing the first movable member into contact with the side provided with the connection terminals of the data recording device. Further, continuous application of the pushing force pushes the device to move in the direction away from the connector, thereby releasing the connection of the connection terminals of the device and the connector.

Especially, as the first movable member is movable only in the direction close to and away from the connector, the data recording device never moves obliquely relative to the connector. Thereby, no improper force is applied to the connection terminals or the connector in release of the connection, avoiding bending or breaking.

It is more preferable that the base has an engaging member operated by an operation lever, so that the engaging member is engaged with one selected from the second and the first movable members by operation of the operation lever in one direction to apply the pushing force toward the connector to the one selected from the second and the first movable members, the one selected from the second and the first movable members being forced to move toward the connector by the pushing force, the other one selected from the second and the first movable members being forced to move toward the connector upon reception of a force from the one selected from the second or the first movable members.

It is also preferable that the second movable member is engaged with the first movable member via an oblique guide, so that the second movable member is adapted to move in a direction oblique to the direction in which the first movable member moves by the oblique guide.

A more specific configuration include such a configuration that the base has an engaging member operated by an operation lever, so that the engaging member is engaged with the second movable member by operation of the operation lever in one direction to apply the pushing force toward the connector to the second movable member, and that the engaging member is engaged with the first movable member by operation of the operation lever in the reverse direction to apply the urging force away from the connector to the first movable member.

According to the present aspect, only the operation of the operation lever applies the necessary pushing force to the first and the second movable members constituting the receptacle, thereby improving operability and simplifying the structure.

In the present aspect, it is possible to have such a configuration that the engaging member pivots by operation of the operation lever, so as to produce the pushing force. According to this configuration, when the operation lever pivots in one direction, the engaging member is engaged with the second movable member to apply the pushing force generated by a pivoting force, and when the operation lever pivots in the opposite direction, the engaging member is engaged with the first movable member to apply the pushing force generated by a pivoting force to the first movable member.

Further, in the case of employing this configuration, force required for pivoting of the operation lever is reduced and operability is improved by making a length between a fulcrum and an input (effort) point of the operation lever longer than a length between a fulcrum and an output (load) point of the engaging member.

It is preferable that the base has a board provided with an interface circuit adapted to interface the data recording device and an external device connected thereto and that the connector is secured to the board.

As described above, when a hard disk drive is used as the data recording device, standards of signal lines required for connection for a 3.5-inch hard disk drive and a 2.5-inch hard disk drive are different from each other.

Thus, for example, even though the connector fixed to the base is connectable to an external device directly via a flat cable in the case of application of the connection unit of the present invention to a 3.5-inch hard disk drive, it is necessary to interpose an interface circuit between the connector fixed to the base and an external device in the case of application of a 2.5-inch hard disk drive.

According to the present aspect, the board having an interface circuit is mounted on the base, to which the connector is fixed. Consequently, even in the case of application of the connection unit of the present aspect to connection of the 2.5-inch hard disk drive, the board and an external device are connected directly via a cable such as a flat cable used for a 3.5-inch hard disk drive, thereby ensuring that its configuration is simplified.

Further, it is preferable to include a fixed position adjuster adapted to adjust a position where the connector is fixed.

Herein, dimensional variation of members constituting the receptacle or relative displacement of a fixed position where each member is fixed to the base may cause displacement of the receptacle itself relative to the base, resulting in relative displacement between the first movable member constituting the receptacle and the connector. Therefore, even though the data recording device is positioned in relation to the contacting portion of the first movable member by being pressed by the first and the second member in connection of the device to the connector, accurate positioning of the device and the connector might not be performed.

According to the present aspect, the fixed position where the connector is fixed is adjusted by the fixed position adjuster in response to the dimensional variation of the members or the displacement of the fixed position of the members relative to the base. Specifically, the data recording device is accommodated in the receptacle to approach to the connector, and then the fixed position of the connector is readily adjusted in response to positions of the connection terminals. That ensures stable connection without relative displacement.

In the present invention, the fixed position adjuster may have such a configuration as adjusting one selected from vertical and horizontal positioning adjustments of the connector relative to the base or as adjusting the both.

### ADVANTAGEOUS EFFECT OF THE INVENTION

The present invention provides a connection unit for a data recording device that is adapted to extremely readily attach a data recording device such as a hard disk drive to a connector and detach it therefrom. That efficiently performs task such as data copy to a plurality of data recording devices in a short period of time.

### BRIEF DESCRIPTION OF THE DRAWINGS

Fig. 1 is a perspective view of a connection unit for a data recording device (2.5-inch hard disk drive) relating to an embodiment of the present invention;
Figs. 2A to 2C are perspective views showing attaching procedures of an operation lever and an engaging member of the connection unit shown in Fig. 1, Fig. 2A being one of the perspective views showing the attaching procedures, Fig. 2B being another perspective view showing the attaching procedures following the procedures shown in Fig. 2A, and Fig. 2C being the other perspective view showing the attaching procedures inside of a base;
Fig. 3A is an exploded perspective view of a second movable member employed in the connection unit shown in Fig. 1;
Fig. 3B is a perspective view showing a structure of the second movable member:
Fig. 4 is a perspective view showing a structure of a first movable member employed in the connection unit shown in Fig. 1;
Figs. 5A and 5B are perspective views showing assembling procedures of a receptacle of the connection unit shown in Fig. 1, Fig. 5A being one of the perspective views showing the assembling procedures, and Fig. 5B being the other perspective view showing the assembling procedures following the procedures shown in Fig. 5A;
Figs. 6A to 6C are perspective views showing procedures for mounting the receptacle shown in Figs. 5A and 5B on the base, Fig. 6A being one of the perspective views showing the mounting procedures, Fig. 6B being another perspective view showing the mounting procedures following the procedures shown in Fig. 6A, and Fig. 6C being the other perspective view showing the mounting procedures following the procedures shown in Fig. 6B;
Figs. 7A to 7C are perspective views showing assembling procedures of a connecting portion of the connection unit shown in Fig. 1, Fig. 7A being one of the perspective views showing the assembling procedures, Fig. 7B being another perspective view showing the assembling procedures following the procedures shown in Fig. 7A, and Fig. 7C being the other perspective view showing the assembling procedures following the procedures shown in Fig. 7B;
Fig. 8A is a perspective view showing adjusting procedures of a fixed position adjuster shown in Figs. 7A to 7C;
Fig. 8B is a perspective view showing a state in which the connecting portion is attached to the base after adjustment according to the procedures shown in Fig. 8A;
Fig. 9A is a front view showing a state in which the operation lever is in a disconnecting direction where the connection is released in the connection unit shown in Fig. 1;
Fig. 9B is a plan view of Fig. 9A;
Fig. 10A is a front view showing a state in which the operation lever is pivoting from the state shown in Fig. 9A in a connecting direction where a data recording device and the connecting portion are to be connected;
Fig. 10B is a plan view of Fig. 10A;
Fig. 11A is a front view showing a state in which the operation lever has further pivoted from the state shown in Fig. 10A in the connecting direction;
Fig. 11B is a plan view of Fig. 11A;
Fig. 12A is a front view showing a state in which pivoting operation of the operation lever is released in staying in the state shown in Fig. 11A;
Fig. 12B is a plan view of Fig. 12A;
Fig. 13A is a front view showing a transient state in which the operation lever is gradually pivoting from the state shown in Fig. 12A in the disconnecting direction;
Fig. 13B is a front view showing a state in which the operation lever has pivoted in the disconnecting direction;
Fig. 14A is a front view of another connection unit for a data recording device (3.5-inch hard disk drive) relating to an embodiment of the present invention;
Fig. 14B is a plan view of Fig. 14A;
Fig. 15 is a perspective view of a power cable available for the connection units shown in Figs. 1 and 14;
Fig. 16 is a schematic diagram showing connection to a data copy device;
Fig. 17 is a perspective view showing a state in which cables are connected to a 3.5-inch hard disk drive; and
Fig. 18 is a perspective view showing a state in which a cable is connected to a 2.5-inch hard disk drive.

### DESCRIPTION OF THE PREFERRED EMBODIMENTS

Now, a preferred embodiment of the present invention will be described below, making reference to the accompanying drawings.

Herein, the following description gives an example of a hard disk drive as a data recording device. Further, in the following description, directions of front and back, right and left, and top and bottom are described on the basis of referred drawings.

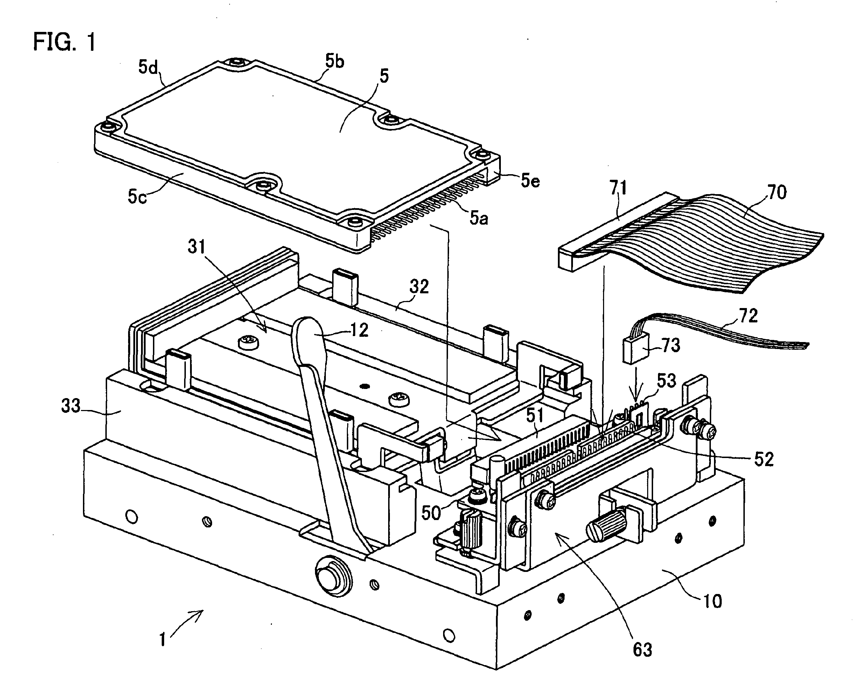

Referring to Fig.1, a connection unit 1 of the present embodiment is roughly constituted by a base 10 provided with a receptacle 31 for accommodating a 2.5-inch hard disk drive 5 and a connecting portion 63 to which a connector 51 to be connected to a hard disk drive 5 is fixed.

The receptacle 31 is attached to the base 10 movably along sliding guides 32 and 33 secured to the top of the base 10, thereby making and releasing a connection between the hard disk drive accommodated therewithin and the connector 51 by operation of an operating lever 12.

The connecting portion 63 has a board 50 on which an interface circuit is mounted. A connector 52 and a power connector 53 as well as the connector 51 are secured to the board 50. The connector 52 and the power connector 53 are for connection to a flat cable 70 and a power cable 72, respectively, which are in turn for connection to an external device (not shown) such as a data copy device.

In other words, the connection unit 1 is used in such a manner as connecting a connector 71 of the flat cable 70 and a power connector 73 of the power cable 72, each cable extending from an external device, to the connector 52 and the power connector 53 of the board, respectively. The connection unit 1 allows access of an external device to the hard disk drive 5 by attaching the hard disk drive 5 accommodated in the receptacle 31 to the connector 51 and detaching it therefrom by operation of the operation lever 12.

The hard disk drive (data recording device) 5 employed in the connection unit 1 of the present embodiment is, as shown in Fig. 1, a 2.5-inch type mainly employed in a laptop computer of substantially a cuboid shape being small in height with four side faces 5b, 5c, 5d, and 5e, and provided with a plurality of connection terminals 5a at the side face 5e.

Now, a detailed structure will be described below, making reference to assembling procedures of the connection unit 1 of the present embodiment. However, the procedures shown below are merely for an example and do not limit assembling orders.

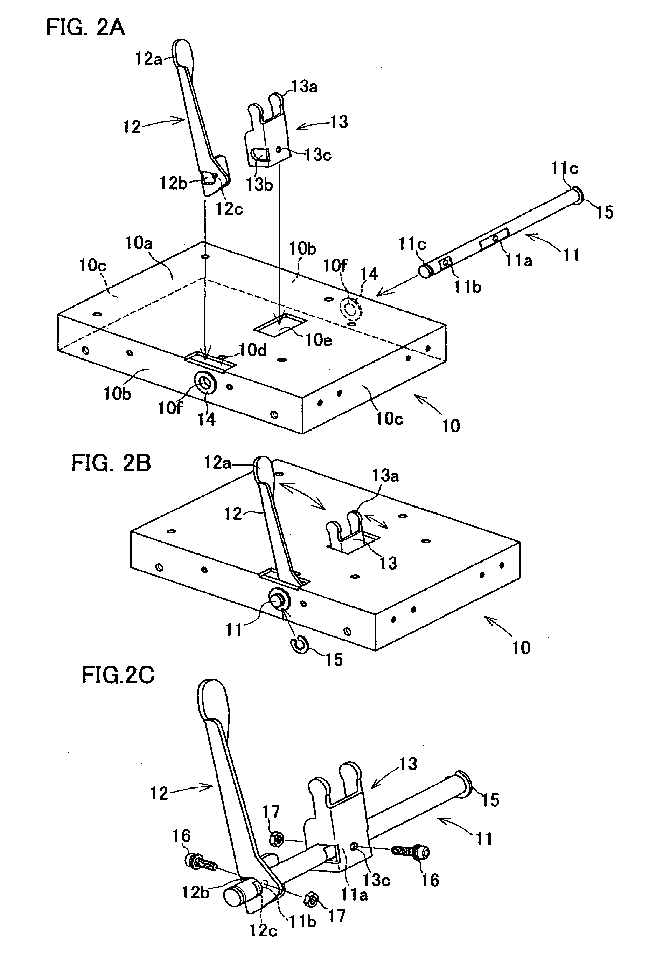

In assembly of the connection unit 1, as shown in Fig. 2, the operation lever 12 and an engaging member 13 are first to be attached to the base 10.

The base 10 is a box-shaped platform that is short in height and formed by turning down a metal plate with a top face 10a, front and back faces 10b and 10b, and right and left faces 10c and 10c, its bottom face being open. The front and back faces 10b and 10b have openings 10f and 10f substantially in their center, respectively, into which openings 10f and 10f resin bushes 14 and 14 are inserted. The top face 10a has a square opening 10d adjacent to the front face 10b and another square opening 10e substantially in the center from the front and back faces 10b and 10b, both openings 10d and 10e formed above a straight line passing through the openings 10f and 10f.

The operation lever 12 is an elongated member of substantially an L shape in section and formed by bending over a metal plate with an operating portion 12a at its top end and an insertion hole 12b through which a rod 11 described below is to be inserted and a fixing hole 12c by means of which the lever 12 is to be fixed to the inserted rod 11, both holes 12b and 12c formed at its bottom end.

The engaging member 13 is substantially a channel-shaped member (square U shape in section) and formed by bending over a metal plate with insertion holes 13b and 13b at its opposite sides and through which the rod 11 is to be inserted and engaging portions 13a and 13a formed by extending the sides upward to circularize its head. A fixing hole 13c by means of which the member 13 is fixed to the inserted rod 11 is formed in the center of a face connecting the opposite sides.

The rod 11 is a cylindrical stick made of a metal slightly longer than the length between the faces 10b and 10b of the base 10 with fixing holes 11a and 11b penetrating in a direction perpendicular to a central axis substantially in its center and at one end, respectively, and has a flat portion formed by cutting peripheral parts adjacent to the fixing holes 11a and 11b. The rod 11 also has annular grooves 11c, to which locking members 15 are mounted, around the periphery at its longitudinal ends.

The operating lever 12 and the engaging member 13 are attached in the following procedures.

First, as shown in Fig. 2A, one of the locking members 15 is pressed into one of the grooves 11c at one end of the rod 11 and the other end of the rod 11 is inserted into one of the bushes 14 of the base 10. The operation lever 12 and the engaging member 13 are inserted into the opening 10d and 10e of the base, respectively. Next, as shown in Fig. 2C, the other end of the rod 1 is sequentially inserted into the insertion holes 13b and 13b of the engaging member 13 and the insertion hole 12b of the operation lever 12, and whereby, as shown in Fig. 2B, the other end of the rod 11 protrudes from the other bush 14. Then, the other locking member 15 is pressed into the groove 11c of the other end of the rod 11 protruded from the bush 14.

Then, as shown in Fig. 2C, within the base 10, the fixing hole 13c of the engaging member 13 is brought in line with the fixing hole 11a of the rod 11, and a setscrew 16 is inserted through the fixing hole 13c and the fixing hole 11a to tighten a nut 17. Similarly, the fixing hole 12c of the operation lever 12 is brought in line with the fixing hole 11b of the rod 11, and a setscrew 16 is inserted through the fixing hole 12c and the fixing hole 11b to tighten a nut 17.

Upon fixation of the operation lever 12 and the engaging member 13 to the rod 11 in this way, as shown in Fig. 2B, the engaging member 13 pivots simultaneously by a pivoting operation of the operation lever 12. As described below, this pivoting operation of the engaging member 13 applies a pushing force to the receptacle 31 engaged with the engaging member 13, so as to perform a moving operation of the receptacle 31.

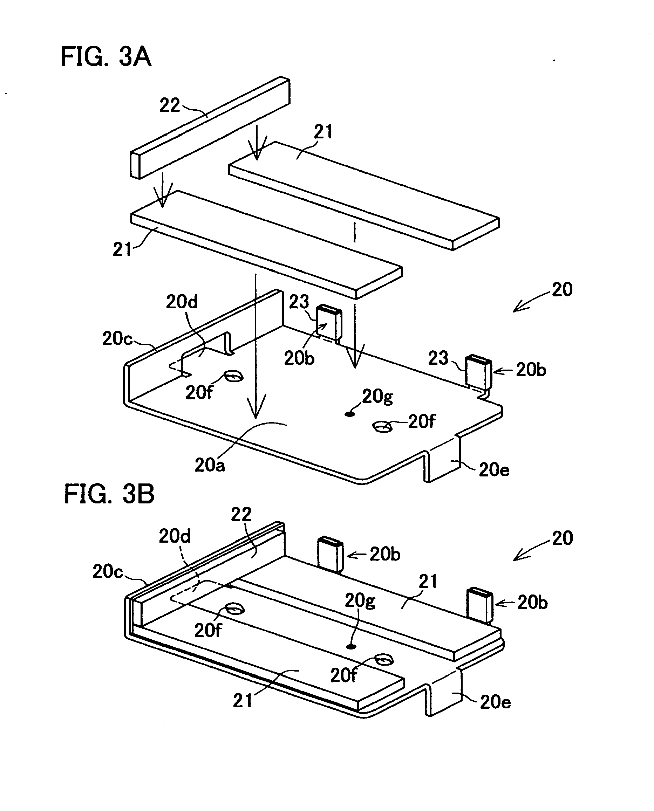

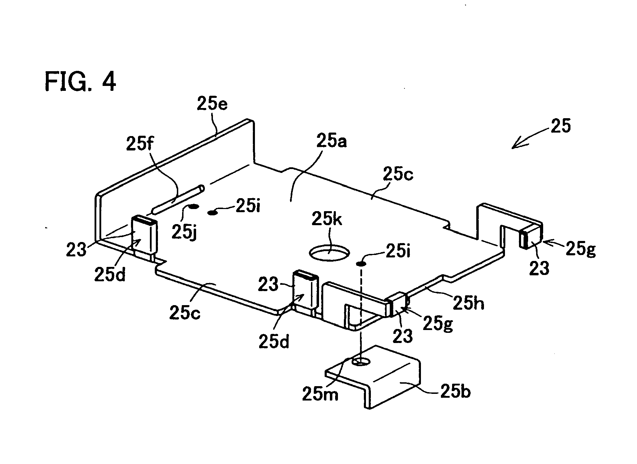

Now, the receptacle 31 will be assembled. The receptacle 31 is formed by combination of a second movable member 20 shown in Figs. 3A and 3B and a first movable member 25 shown in Fig. 4

The second movable member 20, as shown in Figs. 3A and 3B, is a member formed by pressing a metal plate. More specifically, the second movable member 20 has a flat portion 20a of a substantially rectangular shape with a downwardly-protruding engaging portion 20e formed by downwardly folding the central part of its right edge, upwardly-protruding contacting portions 20b and 20b formed by upwardly folding both ends of a longitudinal edge of its back, an upwardly-projecting contacting portion 20c formed by cutting and upwardly folding its left edge without a central part, and a guiding portion 20d formed by the central part protruding horizontally from the contacting portion 20c.

The flat portion 20a of the second movable member 20 has two oval guiding holes 20f arranged in a longitudinal (i.e., right to left) direction in the anteroposterior center. The guiding holes 20f each are formed in a direction oblique at a predetermined angle with respect to a line in a longitudinal direction (in a direction turning clockwise at a 45-degree angle from the line in the longitudinal direction in the present embodiment). A threaded hole 20g is formed at a portion adjacent to the right one of the guiding holes 20f between the guiding holes 20f and 20f.

Further, rubber protection members 21, 21 and 22 and resin protection tubes 23 and 23 are attached to the second movable member 20 so as to protect the hard disk drive 5 from directly contacting with the member 20. Specifically, the protection members 21 and 21 are joined along a longitudinal direction across the guiding holes 20f and 20f and the threaded hole 20g formed in the flat portion 20a, and the protection member 22 is joined onto an inner face of the contacting portion 20c as spanning with the protection members 21 and 21.

The protection tubes 23 and 23 are fit around the contacting portions 20b and 20b.

The first movable member 25, as shown in Fig. 4, is a member formed by pressing a metal plate. More specifically, the first movable member 25 has a flat portion 25a of a substantially rectangular shape with sliding portions 25c and 25c slightly protruding horizontally from the central part of its both longitudinal edges, upwardly-protruding contacting portions 25d and 25d formed by cutting and upwardly folding a part of the longitudinal edge at both ends of the front one of the sliding portions 25c, and releasing portions 25g and 25g formed by bending inwardly heads of upwardly-protruding L-shaped portions formed by upwardly folding the far right of the both longitudinal edges.

An upwardly-protruding portion 25e is formed by upwardly folding the left edge of the flat portion 25a and with a slot-like guiding hole 25f in the center of a bottom of the protruding portion 25e. The flat portion 25a also has a cutting portion 25h partly cut away in the center at its right edge, that is, the edge of the flat portion 25a opposite to the guiding hole 25f.

Further, the flat portion 25a has a threaded hole 25j, threaded holes 25i and 25i, and an opening 25k arranged in a longitudinal direction substantially in its central part. To the left of the flat portion 25a, the threaded hole 25j is formed nearer the guiding hole 25f and one of the threaded holes 25i is formed adjacent to the right of the threaded hole 25j. To the right of the flat portion 25a, the other of the threaded holes 25i is formed nearer its right edge and the opening 25k is formed adjacent to the left of the threaded hole 25i.

The flat portion 25a of the first movable member 25a has in advance an engaging member 25b secured thereto by welding. The engaging member 25b is formed by bending over a rectangular metal plate and has an opening 25m at its horizontal portion. The engaging member 25b is secured by welding to the bottom of the flat portion 25a in such a manner as aligning the center of the opening 25m with the center of the right-hand threaded hole 25i so that a vertical portion is situated at its right.

Further, the first movable member 25 has resin protection tubes 23 respectively fit around the contacting portions 25d and 25d and the releasing portions 25g and 25g so as to protect the hard disk drive 5 from directly contacting therewith.

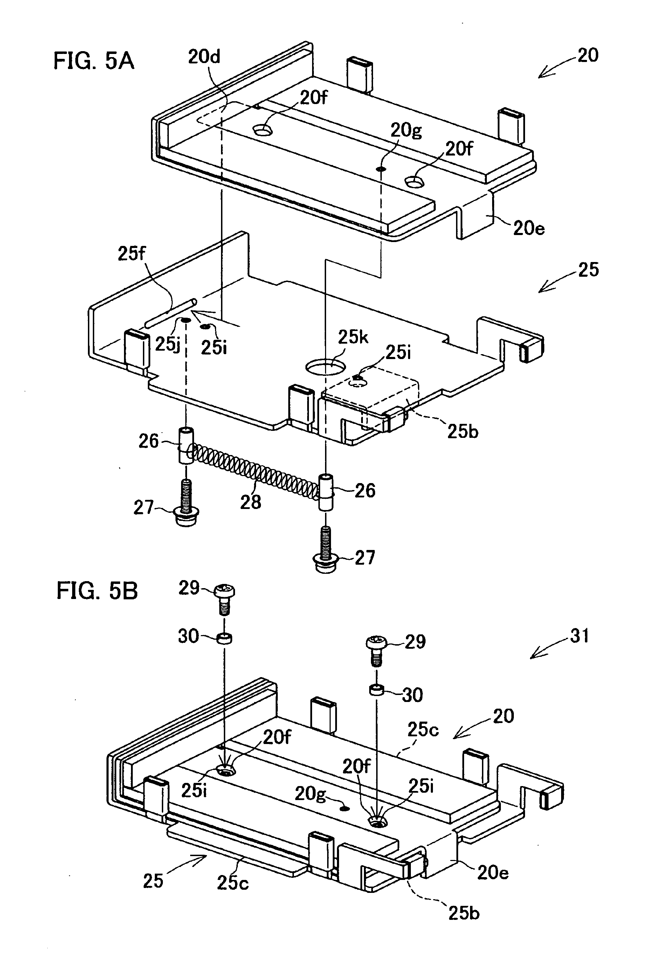

Assembly of the first and second movable members 25 and 20 is performed in the following procedures shown in Fig. 5.

First, as shown in Fig. 5A, the second movable member 20 is placed on the first movable member 25, so as to insert the guiding portion 20d of the second movable member 20 into the guiding hole 25f of the first movable member 25.

Next, a setscrew 27 inserted into a spacer 26 around which one end of a coil spring 28 is hooked is screwed into the threaded hole 25j from beneath of the first movable member 25 to fix them, whereas another setscrew 27 inserted into another spacer 26 around which the other end of the coil spring 28 is hooked is screwed from beneath of the first movable member 25 through the opening 25k into the threaded hole 20g of the second movable member 20 to fix them.

Further, as shown in Fig. 5B, a pair of setscrews 29 each penetrating through a spacer 30 are screwed into the threaded holes 25i and 25i of the first movable member 25 through the guiding holes 20f and 20f of the second movable member 20. The first and the second movable member 25 and 20 are overlapped each other by the above-mentioned procedures, so that the second movable member 20 is coupled with the first movable member 25 movably along a direction of the guiding holes 20f with respect to the first movable member 25, and whereby completing the assembly of the receptacle 31.

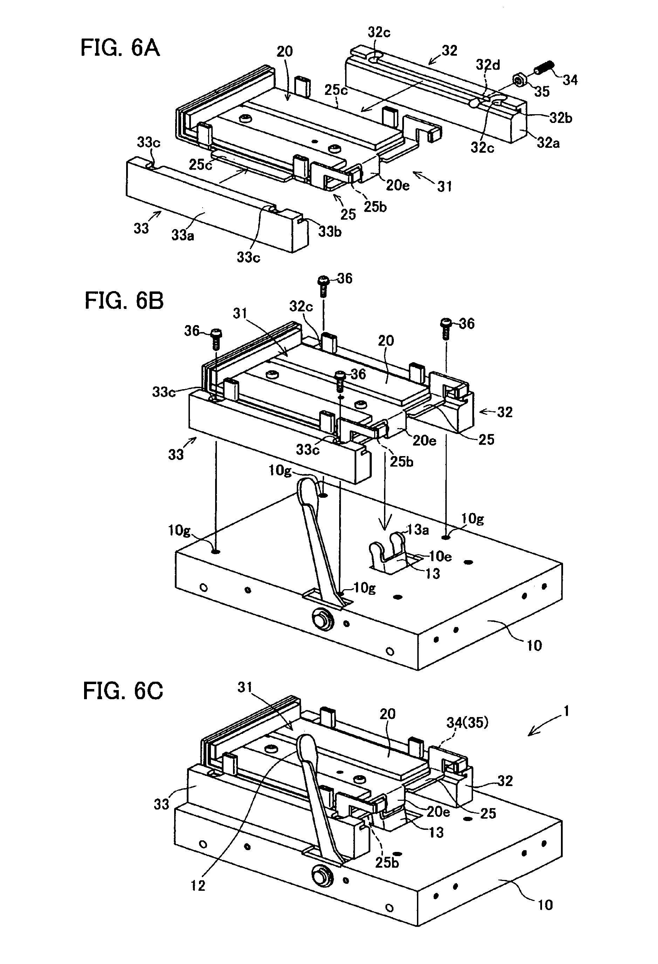

Now, as shown in Fig. 6, the assembled receptacle 31 is mounted on the base 10 using the sliding guides 32 and 33. The sliding guides 32 and 33 each are made of a synthetic resin material with high abrasion resistance and have an elongate main body 32a, 33a with rectangular cross section and with a slot-like sliding groove 32b, 33b, respectively, along a longitudinal direction at the upper part of the main body 32a, 33a. The sliding guides 32 and 33 further have adjacent to both ends of their longer sides fixing holes 32c and 33c respectively, which vertically penetrate through the main bodies 32a and 33a.

The sliding guide 32 has a threaded hole 32d horizontally penetrating therethrough and intersecting with the sliding groove 32b, into which hole 32d an adjusting screw on which a nut 35 is threadably mounted is screwed.

When the receptacle 31 is mounted on the base 10, as shown in Fig. 6A, the sliding guides 32 and 33 are arranged so that inner sides of the sliding grooves 32b and 33b become inward-looking by interposing the receptacle 31 therebetween. Thereafter, the sliding portions 25c and 25c of the first movable member 25 are engaged with the sliding grooves 32b and 33b, so that the receptacle 31 is sandwiched from its both sides by the sliding guides 32 and 33.

Then, as shown in Fig. 6B, the sliding guides 32 and 33 are mounted on the base 10 in sandwiching the receptacle 31 from its both sides so that the engaging portion 13a of the engaging member 13, already attached to the base 10, is interposed between the engaging portion 20e of the second movable member 20 and the engaging portion 25b of the first movable member 25. Thereafter, setscrews 36 are screwed through the respective fixing holes 32c and 33c of the sliding guides 32 and 33 into threaded holes 10g of the base 10 to fix them.

Upon mounting of the receptacle 31 on the base 10 in this way, as shown in Fig. 6C, operation of the operation lever 12 moves the receptacle 31 along the sliding guides 32 and 33. More specifically, when the operation lever pivots in a clockwise direction in the figure, the engaging member 13 comes to engage with the second movable member 20 to move the receptacle 31 to right in the figure. In contrast, when the operation lever pivots in a counterclockwise direction in the figure, the engaging member 13 comes to engage with the first movable member 35 to move the receptacle 31 to left in the figure.

Herein, movement of the receptacle 31 accompanied with the operation of the operation lever 12 will be described in detail below.

Herein, the adjusting screw 34 shown in Fig. 6A is suitably screwed into the sliding guide 32 for adjustment while the operation lever 12 is pivoting to right so as to prevent a relative displacement of the first movable member 25 between the sliding guides 32 and 33, and then the adjusting screw 34 is fixed by the nut 35.

Mounting of the receptacle 31 for accommodating the hard disk drive 5 and its drive mechanism on the base 10 is completed by the above-mentioned procedures.

Now, mounting procedures of the connecting portion 63 provided with the connector 51 to be connected to the hard disk drive 5 will be described below.

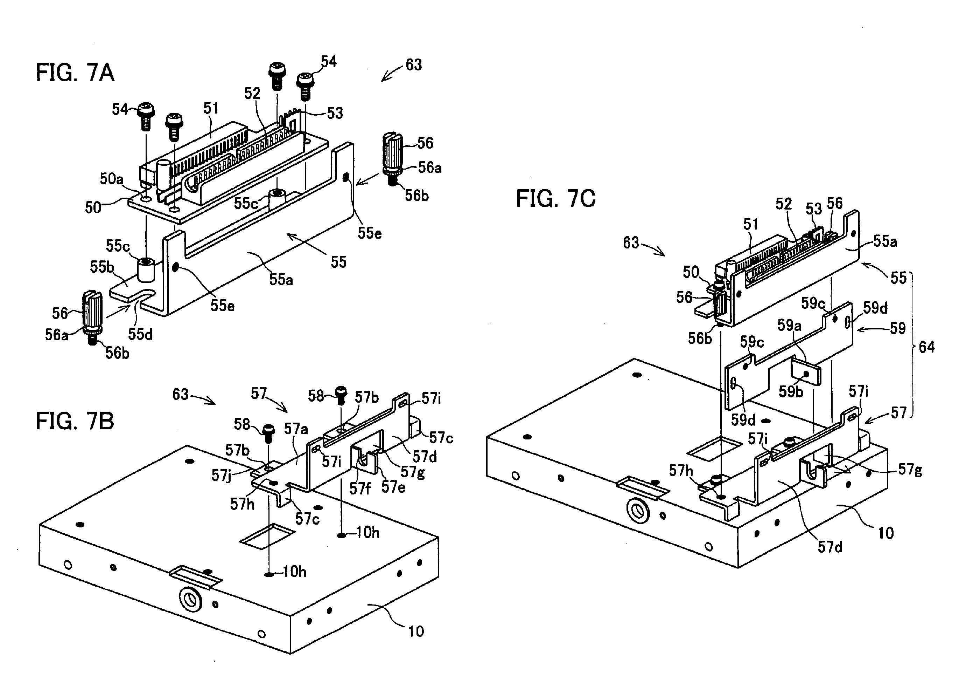

The connecting portion 63, as shown in Fig. 7C, consists mainly of the board 50, a vertically movable bracket 55, a horizontally movable bracket 59, and a fixing bracket 57. Further, the vertically movable bracket 55, the horizontally movable bracket 59, and the fixing bracket 57 constitute a fixed position adjusting portion 64.

The board 50, as shown in fig. 7A, is a printed circuit board of a substantially rectangular shape and made of a substrate such as glass epoxy. The board 50 has the connector 51 to be connected to the hard disk drive 5, the connector 52 to be connected to the flat cable 70 (see Fig. 1) to be connected to an external device (not shown), and the power connector 53 to be connected to the power cable 72 (see Fig. 1) to be connected to the external device as well, each secured thereto. Further, the board 50 has thereon an interface circuit for transforming between signals for a 3.5-inch hard disk drive (the connector 52 side) and signals for a 2.5-inch hard disk drive to be connected to the connector 51.

The vertically movable bracket 55, as shown in Fig. 7A, is a bracket made of a substantially rectangular metal plate with a vertical portion 55a and a horizontal portion 55b formed by orthogonally folding the plate. The vertical portion 55a has threaded holes 55e and 55e at both ends of its longer side, whereas the horizontal portion 55b has four spacers 55c with threaded holes for fixing the board 50, the spacers 55c being secured adjacent to both ends of its longer side. Further, the horizontal portion 55b has a round notch 55d inwardly cut out at each end of its longer side.

The horizontally movable bracket 59, as shown in Fig. 7C, is a bracket made of a substantially rectangular metal plate with a protruding portion 59a formed by cutting and orthogonally folding a part of a central part of the plate. The horizontally movable bracket 59 has fixing holes 59d and 59d of a vertically elongated oval shape at both ends of its longer side, and threaded holes 59c and 59c medially adjacent to the fixing holes 59d and 59d. Further, the protruding portion 59a has a threaded hole 59b in its center.

The fixing bracket 57, as shown in Fig. 7B, is a bracket made of a substantially rectangular metal plate with a vertical portion 57d and a horizontal portion 57a formed by orthogonally folding the plate. The horizontal portion 57a has adjacent to both ends of its longer side fixing portions 57j and 57j and supporting portions 57c and 57c respectively for fixing and supporting the horizontal portion 57a so as to keep the horizontal portion 57a over the top of the base 10, each fixing portion 57j having a fixing hole 57b. Further, the vertical portion 57d has a protruding portion 57e formed by cutting and orthogonally folding a part of its central part, and an opening 57g at the cut part. There are also threaded holes 57h and 57h at both ends of a longer side of the horizontal portion 57a, fixing holes 57i and 57i of a horizontally elongated oval shape topside at both ends of a longer side of the vertical portion 57d, and a round notch 57f indented downwardly from a top edge in the center of the protruding portion 57e.

The connecting portion 63 is assembled in the following manner.

First, as shown in Fig. 7A, the board 50 is placed onto the spacers 55c of the vertically movable bracket 55 and fixed by screwing setscrews 54 through four fixing holes 50a of the board 50 into the threaded holes of the spacers 55c. Then, vertically adjusting screws 56 and 56 are respectively inserted into the notches 55d and 55d of the vertically movable bracket 55. The screws 56 each are a screw with a groove portion 56a formed all around a periphery of an enlarged diameter part at the head of its threaded portion 56b and is mounted by fitting the groove portion 56 in the notch 55d.

Next, as shown in Fig. 7B, the fixing bracket 57 is placed onto the base 10 and fixed by screwing setscrews 58 and 58 through the fixing holes 57b and 57b into threaded holes 10h and 10h respectively.

Then, as shown in Fig. 7C, the horizontally movable bracket 59 is overlapped with the vertical portion 57d of the fixing bracket 57 with the protruding portion 59a of the bracket 59 protruding through the opening 57g of the fixing bracket 57 fixed to the base 10.

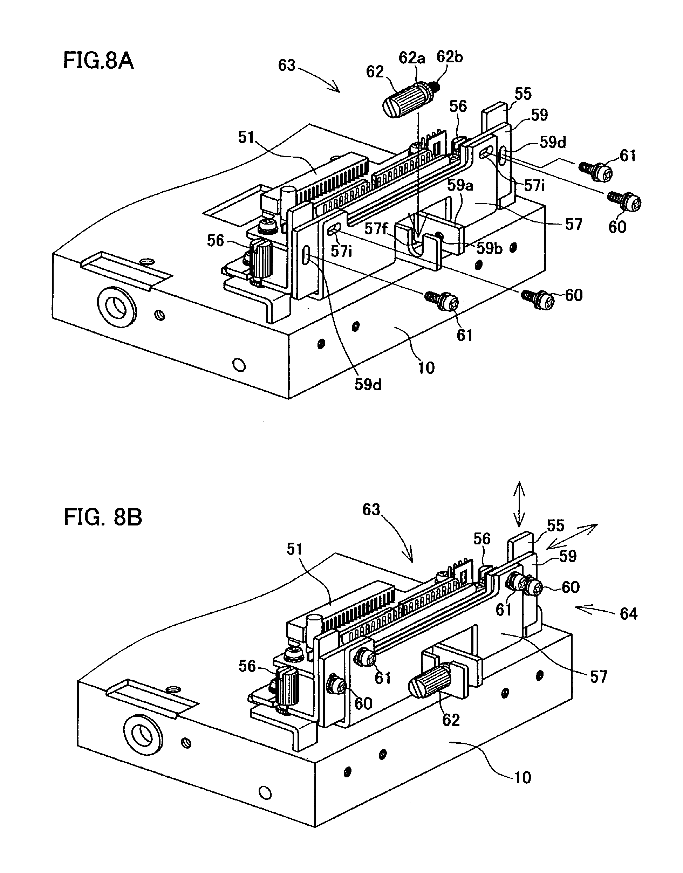

Thereafter, as shown in Fig. 7C, the vertical portion 55a of the vertically movable bracket 55 to which the board 50 is fixed in advance is overlapped with the horizontally movable bracket 59, and the two threaded portions 56b and 56b of the vertically adjusting screws 56 and 56 are screwed into the threaded holes 57h and 57h of the fixing bracket 57 respectively, as also shown in Fig. 8A,

Then, a groove portion 62a of a horizontally adjusting screw 62 is screwed into the notch 57f of the fixing bracket 57, whereas a threaded portion 62b is screwed into the threaded hole 59b formed at the protruding portion 59a of the horizontally movable bracket 59. Herein, the horizontally adjusting screw 62 has the same structure as that of the vertically adjusting screw 56 (see Fig. 7A) described above.

Further, as shown in Fig. 8A, setscrews 60 and 60 are screwed through the fixing holes 57i and 57i of the fixing bracket 57 into the threaded holes 59c and 59c of the horizontally movable bracket 59 respectively to be temporarily fastened. Similarly, setscrews 61 and 61 are screwed through the fixing holes 59d and 59d of the vertically movable bracket 59 into the threaded holes 55e and 55e of the vertically movable bracket 55 respectively to be temporarily fastened.

As shown in Fig. 8B, the connecting portion 63 is mounted to the base 10 by the above-mentioned mounting procedures. Herein, as the setscrews 60 and 61 are temporarily fastened, adjustment of the vertically adjusting screws 56 and 56 and the horizontally adjusting screw 62 allow the vertically movable bracket 55, to which the board 50 is fixed, movable vertically (i.e., up and down) and horizontally (i.e., back and forth), thereby functioning as the fixed position adjusting portion 64.

Specifically, as shown in Fig. 7C, the fixing holes 59d and 59d of the horizontally movable bracket 59 each are of a vertically (i.e., up and down) elongated oval shape with the setscrews 61 and 61 each temporarily fastened. Consequently, adjustment of the vertically adjusting screws 56 and 56 enable the vertically movable bracket 55 to be moved and adjusted vertically (i.e., up and down) relative to the fixing bracket 57. Similarly, as shown in Fig. 7C, the fixing holes 57i and 57i of the fixing bracket each are of a horizontally (i.e., back and forth) elongated oval shape with the setscrews 60 and 60 each temporarily fastened. Consequently, adjustment of the horizontally adjusting screw 62 enables the horizontally movable bracket 59 to be moved and adjusted horizontally (i.e., back and forth) integrally with the horizontally movable bracket 55 relative to the fixing bracket 57.

More specifically, the fixed position adjusting portion 64 adjusts a fixed position where the connector 51 fixed to the board 50 is to be fixed relative to the base 10 by adjusting the vertically adjusting screws 56 and 56 and the horizontally adjusting screw 62, with the setscrews 60, 60 and 61, 61 each temporarily fastened. That ensures, as described below, connection of the hard disk drive 5 accommodated in the receptacle 31 to the connector 51. Herein, after adjustment of the fixed position, the setscrews 60, 60 and 61, 61 are fully tightened to be fixed, thereby maintaining stably the fixed position of the connector 51.

As to the connection unit 1 of the present embodiment, assembly is completed by the above-mentioned procedures.

Now, operations for accommodating the hard disk drive 5 in the connection unit 1 to attach the drive 5 to the connector 51 and detach it therefrom will be described below.

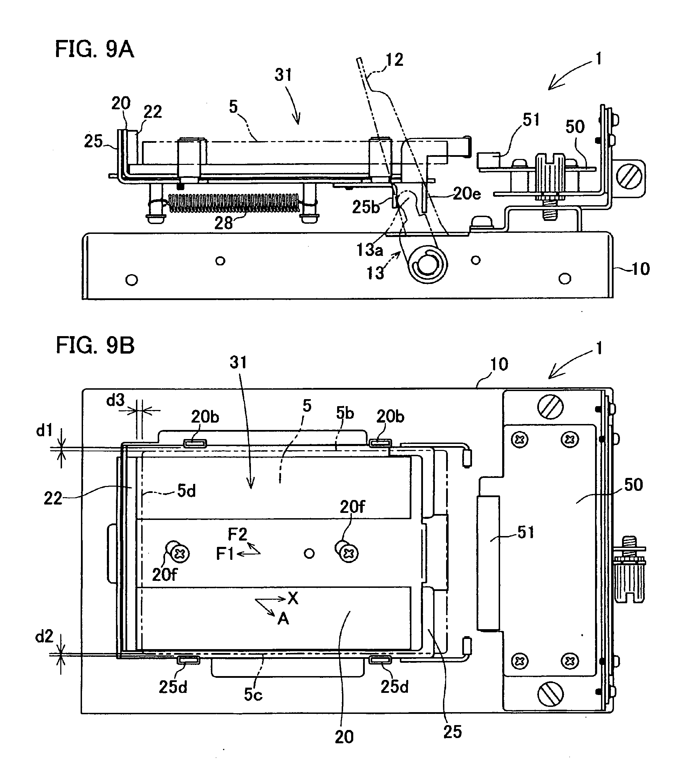

First, as shown in Fig. 9A, upon pivoting of the operation lever 12 in a counterclockwise direction in the figure, that is, when the operation lever comes to be in a position where a connection between the receptacle 31 and the connecting portion is released, the engaging portion 25b of the first movable member 25 becomes engaged with the engaging portion 13a of the engaging member 13 to be subject to a pushing force towards a direction away from the connector 51, and whereby the receptacle 31 moves in a direction away from the connector 1 along the sliding guides 32 and 33 (see Fig. 6).

Herein, as shown in Fig. 9B, the first movable member 25 is movable along a direction X heading the connector 51 with respect to the base 10. The second movable member 20 is attached to the first movable member 25 so as to be movable along the base 10 and along a direction A oblique to the direction X in which the first movable member 25 moves. Herein, an oblique direction of the guiding holes 20f of the second movable member 20 is the oblique direction A.

Further, as shown in Figs. 9A and 9B, the second movable member 20 is normally subject to an urging force F1 towards a direction away from the connector 51 with respect to the first movable member 25 by the coil spring 28.

Consequently, under the condition that the operation lever 12 pivots to left in the figure as shown in Fig. 9A, the second movable member 20, as shown in Fig. 9A, is subject to the urging force F1, whereby a component force F2 of the urging force F1 acts along the oblique direction A. Therefore, the second movable member 20 moves along the oblique direction A with respect to the first movable member 25, so that the contacting portion 20b of the second movable member 20 becomes away from the contacting portion 2d of the first movable member 25.

When the hard disk drive 5 to be connected is accommodated in the receptacle 31 in this state, as shown in Fig. 9B, gaps are formed between the first and the second movable members 25 and 20 and both sides 5b and 5c of the drive 5 along the direction in which the receptacle 31 moves.

Specifically, as shown in Fig. 9B, when the disk 5 to be connected is randomly accommodated in the receptacle 31, gap d2 is formed between each of the contacting portions 25d and 25d of the first movable member 25 and one side 5c of the drive 5, whereas gap d1 is formed between each of the contacting portions 20b and 20b of the second movable member 20 and the other side 5b of the drive 5. Further, gap d3 is formed between the protection member 22 attached to the second movable member 20 and a left side 5d of the drive 5.

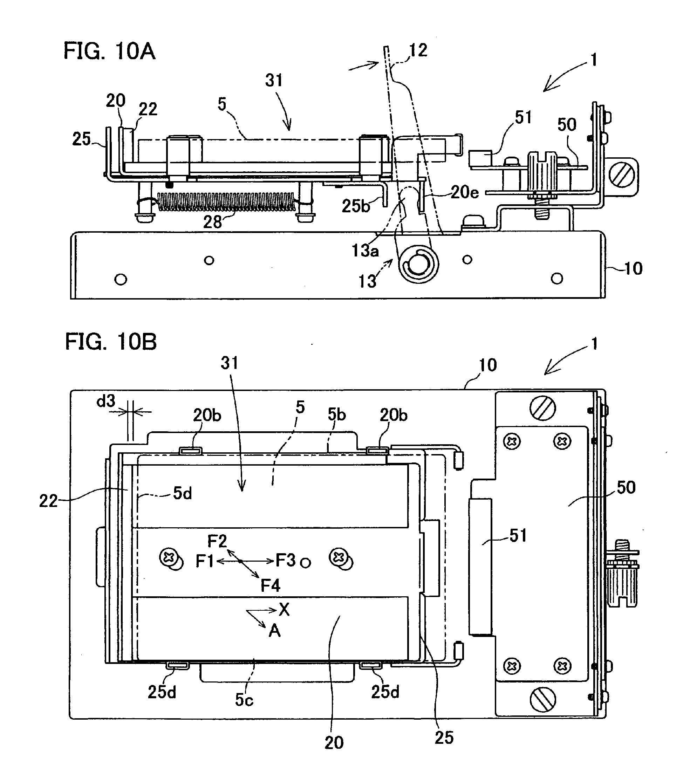

After the drive 5 is accommodated in the receptacle 31, as shown in Fig. 10, upon pivoting of the operation lever 12 in a clockwise direction in the figure, the engaging portion 13a of the engaging member 13 becomes engaged with the engaging portion 20e of the second movable member 20, thereby applying pushing force F3 toward the connector to the second movable member 20.

Herein, the pushing force F3 is larger than the urging force F1 of the coil spring 28 shown in Fig. 9B.

Application of the pushing force F3 to the second movable member 20 allows the second movable member 20 to move toward the oblique direction A against the urging force F1 by a component force F4 of the pushing force F3 toward the oblique direction A. In accordance with the movement of the second movable member 20 in the oblique direction A, one side 5c of the drive 5 comes into contact with the contacting portions 25d and 25d of the first movable member, and further, the contacting portions 20b and 20b of the second movable member 20 come in contact with the other side 5b of the drive 5 to push the side 5b toward the side 5c. That is, the respective contacting portions 25d, 25d and 20b, 20b of the first and the second movable members 25 and 20 holds the hard disk drive 5 accommodated in the receptacle 31 by pressing both sides 5b and 5c thereof.

Herein, as described above, the first movable member 25 is movable only along the sliding guides 32 and 33 and toward the connector 5, and unmovable in another direction. Consequently, as shown in Fig. 10B, the first and the second movable members 25 and 20 hold the hard disk, so that one side 5c of the drive 5 is positioned by contacting with the contacting portions 25d and 25d of the first movable member 25. In this state, the gap d3 between the left side 5d of the drive 5 and the protection member 22 secured to the second movable member 20 still remains.

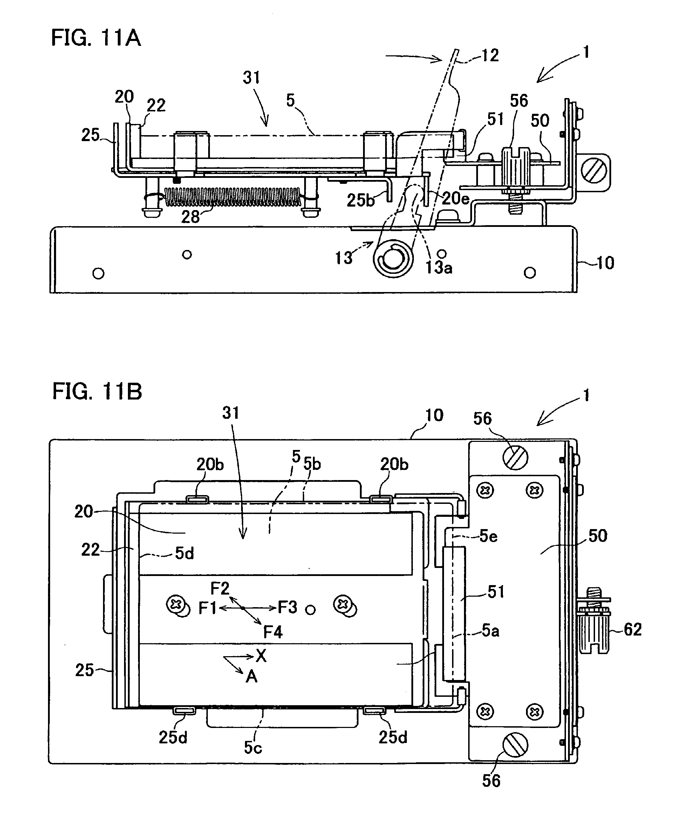

When the operation lever 12 further pivots in the clockwise direction to continue to apply the pushing force F3 to the second movable member 20, as shown in Fig. 11, the second movable member 20 is prevented from further moving in the oblique direction A because the both sides 5c and 5b of the drive 5 are held by the first and the second movable members 25 and 20. Thus, the second and first movable members 20 and 25 integrally move toward the connector 51 with holding the hard disk drive 5 while the contacting portions 20b of the second movable member 20 contact with and press the side 5b of the drive 5.

Then, when the connection terminals 5a of the hard disk drive 5 come into contact with the connector 51, further pivoting of the operation lever 12 makes only the receptacle 31 to move toward the connector 51, so that the left side 5d of the drive 5 comes into contact with the protection member 22. Thereafter, further application of the pushing force F3 to the second movable member 20 by further pivoting of the operation lever 12 makes the drive 5 to move toward the connector 51, and whereby the connection terminals 5a are engaged with the connector 51 to complete the connection.

Herein, as shown in Fig. 11, it is possible to suspend pivoting of the operation lever 12 just before the connection terminals 5a of the drive 5 come into contact with the connector 51, so as to adjust the vertically adjusting screws 56 and 56 and the horizontally adjusting screws 62 as shown in Fig. 8B to align the fixed position of the connector 51 with the connection terminals 5a of the drive 5, ensuring the subsequent connection.

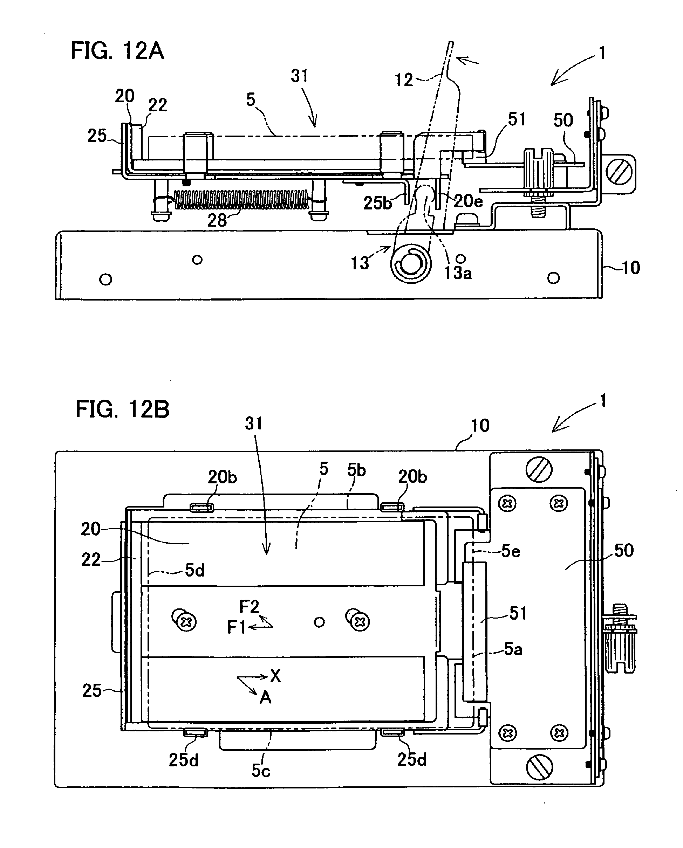

Next, when pushing of the operation lever 12 is released after the connection of the connection terminals 5a of the hard disk drive 5 to the connector 51 as shown in Figs. 11A and 11B, as shown in Figs. 12A and 12B, the urging force F1 applied to the second movable member 12 by the coil spring 28 makes the second movable member 20 to move along the oblique direction A. Thereby, the contacting portions 20b of the second movable member 20 move away from the side 5b of the drive 5, so that holding of the drive 5 is released.

In other words, when the pushing of the operation lever 12 is released after the hard disk drive 5 is connected to the connector 51, the first and the second movable member 25 and 20 release their holding of the drive 5. Thereby, no more stress resulting from the holding is applied to the connection between the connection terminals 5a and the connector 51.

Now, operations for releasing the connection between the hard disk drive 5 and the connector 51 will be described below.

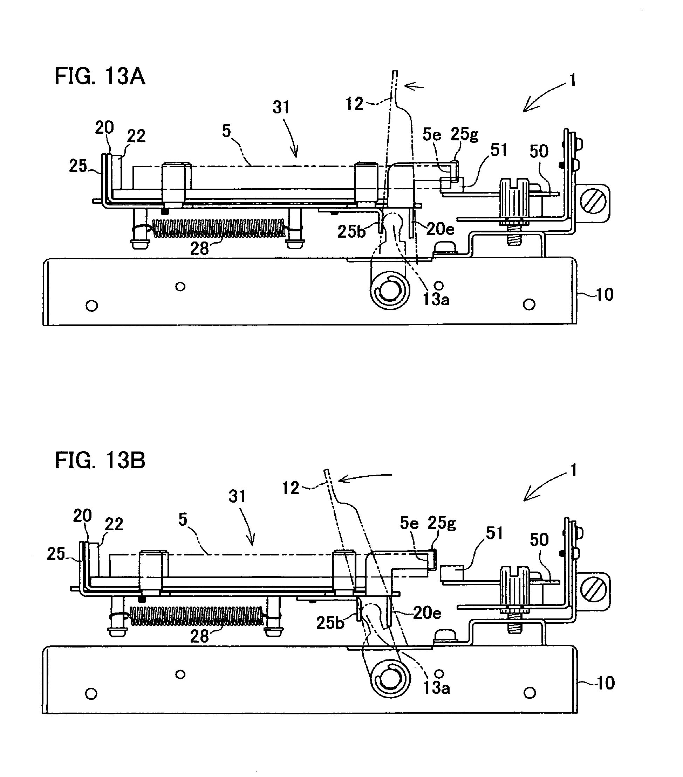

Referring to Fig. 13A, pivoting of the operation lever 12 in the counterclockwise direction from the state in Figs. 12A and 12B makes the engaging portion 13a of the engaging member 13 to be engaged with the engaging portion 25b of the first movable member 25, so that the receptacle 31 moves to left in the figure.

Further pivoting of the operation lever 12 in the counterclockwise direction, as shown in Fig. 13A, brings the releasing portion 25g of the first movable member 25 into contact with the right side 5e of the hard disk drive 5. Then, when the operation lever 12 continues to pivot, the first movable member 25 moves to left, so that the releasing portion 25g push the side 5e of the drive 5 to left to release the connection between the connection terminals 5a and the connector 51. At this time, as holding of the drive 5 is released, as shown in Fig. 12B, the drive 5, on which the connection is released, is easy to be taken out from the receptacle 31.

As described above, according to the connection unit 1 of the present embodiment, only random accommodation of the hard disk drive 5 in the receptacle 31 and operation of the operation lever connects the drive 5 to the connector 51 without failure with aligning, so as to protect the connection terminals 5a or the connector 51 from bending or breaking. Further, only operation of the operation lever 12 in the opposite direction makes it extremely easy to release connection between the connector 51 and the hard disk drive 5 to take out the drive 5.

That remarkably improves working efficiency in performance such as data copy by successively connecting a plurality of hard disk drives 5, and further, protects the connection terminals 5a from breaking or bending and avoids poor connection between the drive 5 and the connector 51.

Further, as shown in Fig. 1, the connection unit 1 of the present embodiment has the interface circuit mounted on the board 50 of the connecting portion 63, thereby dispensing with an interface circuit incorporated in an external device even in the case of connecting with a 2.5-inch hard disk drive 5 and enabling the use of the flat cable 70 for a 3.5-inch type as a connection cable.

The connection unit 1 of the present embodiment has such a configuration that the fixed position of the connector 51 is vertically and horizontally adjustable by the fixed position adjusting portion 64, but, for example, may have such a configuration with only horizontal adjustment without vertical adjustment.

Further, it is also possible to have a simplified fixed position adjusting portion such that a bracket to which the board 50 is attached is moved with setscrews temporarily fastened and without the vertically adjusting screws 56 or the horizontally adjusting screws 62 to make a positioning and the setscrews are tightened afterwards.

Herein, the connection unit 1 shown in the above-mentioned embodiment is a unit for connection of the 2.5-inch hard disk drive 5 to the connector 51, but may constitute a connection unit 2 for connection of a 3.5-inch hard disk 6.

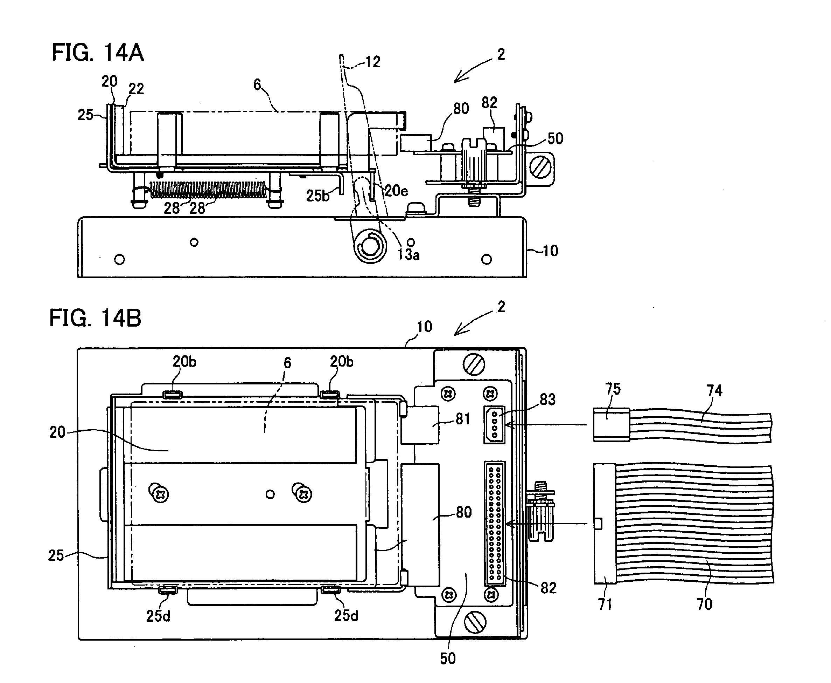

Figs. 14A and 14B are a front view and a plan view of a structure of another connection unit 2 for connection of the 3.5-inch hard disk drive 6. Herein, the hard disk drive 6 is the same as that shown in Fig. 17.

The connection unit 2 shown in Figs. 14A and 14B has the same basic structure as that of the connection unit 1 of the above-mentioned embodiment, but dimensions of its portions are enlarged according with enlargement of dimensions of the hard disk drive 6. Further, a connector 80, a power connector 81, and connectors 82 and 83 are secured to the board 50. The connector 80 and the power connector 81 are for connection to connection terminals 6a and power terminal 6b of the drive 6, respectively. The connectors 82 and 83 are for connection between the connector 80 and the power connector 81 and the flat cable 70 and the power cable 74, respectively, which are in turn for connection to an external device. Printed wirings of the board 50 connect between counterpart terminals of the connector 80 and 82 and connect between counterpart terminals of the connectors 81 and 83.

That is, the flat cable 70 and the power cable 74 are attached to and detached from the hard disk drive 6 by using the connection unit 2 instead of direct connection.

The connection unit 2 attaches the hard disk drive 6 simultaneously to the connectors 80 and 81 and detaches it simultaneously therefrom, extremely facilitating operations for connection of the drive 6. Further, that protects the connection terminals of the drive 6 from bending or breaking and prevents the connectors 80 and 81 from poor connection, as well as the above-mentioned connection unit 1.

Herein, the connection unit 2 shown in Figs. 14A and 14B has such a structure that both the connector 80 and the power connector 81 are simultaneously attached to and detached from the drive 6, but may have such a structure that only the connector 80 is attached thereto and detached therefrom using the connection unit 2 and the connector 75 of the power cable 74, which is readily attachable and detachable, is directly attached to and detached from a power terminal of the drive 6 without using the connection unit 2.

Further, the connection unit 2 shown in Figs. 14A and 14B has such a structure using the board 50, but may have such a structure as securing a relay connector to the base with eliminating the board 50, the relay connector being attachable and detachable to the connection terminals 6a and the power terminals 6b (see Fig. 17) of the hard disk drive 6 and simultaneously capable of connecting the flat cable 70 and the power cable 74 thereto.

The connection unit 1 of the above-mentioned embodiment, as shown in Fig. 1 and 7A, has the interface circuit for transforming signals connected to the drive 5 from a 3.5-inch type into a 2.5-inch type mounted to the board 50 and uses the compact power connector 53 for connecting the power cable 72 so as to reduce space for the board 50. However, the power connector 83 adaptable for the connector 75 of the power cable 74 to be connected to a 3.5-inch hard disk drive shown in Fig. 14 may be fixed to the board 50, if enough space can be made on the board 50.

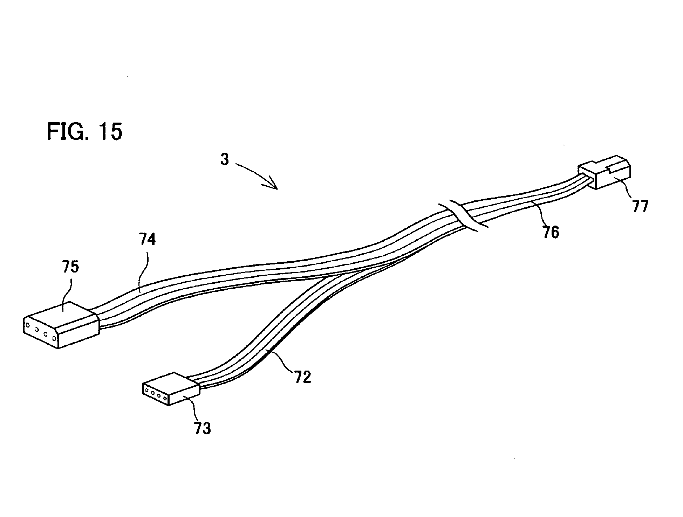

Referring to Fig. 15, a shared power cable 3 prepared in advance also can be used for both of the above-mentioned connection units 1 and 2, in which cable 3 the poser cable 74 provided with the connector 75 to be connected to a power terminal of the 3.5-inch hard disk drive 6 and the power cable 72 provided with the power connector 73 to be connected to the power connector 53 shown in the above-mentioned connection unit 1 are connected to a power cable 76 provided with a connector 77 to be connected in parallel to an external device (not shown).

Herein, the connection units 1 and 2 shown in the above-mentioned embodiments provide the descriptions by giving the hard disk drive 5, 6 as an example of a data recording device, but the structure of the present invention can be applied to a data recording device requiring attachment and detachment of a multicore cable besides the hard disk drive.

The present embodiment embodies a connection unit for a data recording device with a simple structure.

Further, the present embodiment readily accommodates a data recording device in a receptacle and takes it out thereof, thereby providing a connection unit for a data recording device with improved workability.

Still further, the present embodiment readily releases a connection between a data recording device and a connector, thereby providing a connection unit for a data recording device with improved workability.

Yet further, the present embodiment applies a pushing force to a receptacle with a simple structure, thereby providing a connection unit for a data recording device with simplified structure and reduced costs.

Yet still further, the present embodiment uses common members for various kinds of data recording devices, thereby providing a connection unit for a data recording device with reduced costs and improved manufacturability.

Further, the present embodiment readily adjusts a fixed position where a connector is fixed, thereby providing a connection unit for a data recording device with improved manufacturability.

## Claims

1. A connection unit for a data recording device, comprising a base and a connector fixed to the base, and for connecting to the connector a data recording device of a substantially cuboid shape and with a plurality of connection terminals arranged at one side of the device,
wherein the base comprises a receptacle being movable along a direction heading for the connector with accommodating the data recording device, and
wherein the receptacle is adapted to hold the device by pressing both sides of the device along the direction in which the receptacle moves upon application of pushing force to the receptacle toward the connector, so as to move with adjusting the device in a position corresponding to a position where the connector is fixed, so that the connection terminals are connected to the connecter.

2. The connection unit as defined in claim 1,
wherein the both sides of the data recording device are pressed only when the pushing force toward the connector is applied to the receptacle, and the both sides are released when the pushing force is not applied.

3. The connection unit as defined in claim 1 or 2,
wherein the receptacle is formed by combination of a first movable member adapted to move along sliding guides secured to the base and a second movable member attached to the first movable member in such a manner as moving in a direction oblique to the direction in which the first movable member moves and along the base, and
wherein the first movable member is adapted to have contact with one side of the data recording device along the sliding guides and the second movable member is adapted to have contact with the other side of the device along the sliding guides and a side facing to a side provided with the connection terminals,
the pushing force toward the connector being applied to one selected from the second and the first movable members.

4. The connection unit as defined in claim 1 or 2,
wherein the receptacle is formed by combination of a first movable member adapted to move along sliding guides secured to the base and a second movable member attached to the first movable member in such a manner as moving in a direction oblique to the direction in which the first movable member moves and along the base, and
wherein the first movable member is adapted to have contact with one side of the data recording device along the sliding guides and the second movable member is adapted to have contact with the other side of the device along the sliding guides and a side facing to a side provided with the connection terminals,
the pushing force toward the connector being applied to the second movable members.

5. The connection unit as defined in claim 4,
wherein the second movable member is stopped from moving in the oblique direction upon release of the application of the pushing force to the second movable member, so that pressure to the other side of the device is released.

6. The connection unit as defined in claim 4 or 5,
wherein the second movable member is urged in a direction away from the connector relative to the first movable member.

7. The connecting unit as defined in one of claims 4 to 6,
wherein the first movable member is adapted to have contact with the side provided with the connection terminals of the device,
the urging force away from the connector being applied to the first movable member.

8. The connection unit as defined in one of claims 2 to 7,
wherein the base has an engaging member operated by an operation lever,
so that the engaging member is engaged with the second movable member by operation of the operation lever in one direction to apply the pushing force toward the connector to the second movable member, and that the engaging member is engaged with the first movable member by operation of the operation lever in the reverse direction to apply the urging force away from the connector to the first movable member.

9. The connection unit as defined in one of claims 2 to 7,
wherein the base has an engaging member operated by an operation lever,
so that the engaging member is engaged with one selected from the second and the first movable members by operation of the operation lever in one direction to apply the pushing force toward the connector to the one selected from the second and the first movable members,
the one selected from the second and the first movable members being forced to move toward the connector by the pushing force,
the other one selected from the second and the first movable members being forced to move toward the connector upon reception of a force from the one selected from the second or the first movable members.

10. The connection unit as defined in claim 8 or 9,
wherein the second movable member is engaged with the first movable member via an oblique guide,
so that the second movable member is adapted to move in a direction oblique to the direction in which the first movable member moves by the oblique guide.

11. The connection unit as defined in one of claims 8 to 10,
wherein the engaging member pivots by operation of the operation lever, so as to produce the pushing force.

12. The connection unit as defined in one of claims 1 to 11,
wherein the base has a board provided with an interface circuit adapted to interface the data recording device and an external device connected thereto,
wherein the connector is secured to the board.

13. The connection unit as defined in one of claims 1 to 12, further comprising a fixed position adjuster adapted to adjust a position where the connector is fixed.
